# EUROPEAN PATENT SPECIFICATION

(11) **EP 4 566 792 B1**
(45) Date of publication and mention of the grant of the patent: **17.06.2026**
(21) Application number: 24204089.7
(22) Date of filing: 02.10.2024
(51) Int. Cl.: B29C 49/06, B29C 49/48, B29C 49/42, B29C 33/44, B29C 45/04, B29C 49/12, B29C 49/58, B29L 31/00

(54) **EXTENSION ROD SLIDING MECHANISM, INTERMEDIATE MOLD, AND MOLD UNIT**
AUSZIEHSTANGENGLEITMECHANISMUS, ZWISCHENFORM UND FORMEINHEIT
MÉCANISME COULISSANT DE TIGE D'EXTENSION, MOULE INTERMÉDIAIRE ET UNITÉ DE MOULE

(30) Priority: 07.12.2023 JP 2023206699
(43) Date of publication of application: 11.06.2025
(73) Proprietor: Sumitomo Heavy Industries, Ltd., Tokyo 141-6025 (JP)
(72) Inventor: SATO, Takayuki, Chiba, 263-0001, (JP)
(74) Representative: Louis Pöhlau Lohrentz

(56) References cited:
- EP-A1- 2 022 618
- JP-B2- 4 425 750

## Description

### BACKGROUND OF THE INVENTION

### Field of the Invention

The present invention relates to an extension rod sliding mechanism, an intermediate mold, and a mold unit.

### Description of Related Art

In injection blow molding, which is a molding technique in which injection molding and blow molding are performed in two stages, a preform, which is an intermediate molding product, is molded through the injection molding, and a product such as a container is molded by blowing air into the preform and expanding the preform through the blow molding. In the blow molding of injection blow molding, an extension rod, of which one end is joined to an extension plate and the other penetrates a through-hole of a blow core, slides in the through-hole of the blow core together with the movement of the extension plate, and air is blown by causing a tip part to enter the preform (for example, Japanese Patent No. 4425750).

### SUMMARY OF THE INVENTION

The through-hole of the blow core guides the extension rod that operates in an axial direction. However, when a certain force is applied to the extension plate and the operation becomes unstable, the operation of the extension rod joined to the extension plate also becomes unstable, resulting in "core shift" that causes uneven thickness, gate shift, or the like in which the thickness of a molding product becomes uneven. Further, the blow core and the extension rod rub against each other to generate abrasion powder or to cause gnawing of the mold in some cases. Therefore, it is desirable that the operation of the extension plate and the operation of the extension rod are more stable.
Document JP 4 425750 B2 discloses an extension rod sliding mechanism comprising:an extension rod that outputs a fluid, which extends an intermediate molding product through blow molding, from a tip part;an extension plate (46a) that is joined to the extension rod (44) and that moves in an axial direction of the extension rod;a blow core portion (43a) in which a through-hole for guiding the extension rod that moves in the axial direction with a movement of the extension plate is formed; and a guide member that penetrates the extension plate in the axial direction of the extension rod and that guides the extension plate moving in the axial direction of the extension rod.

An object of the present invention is to further stabilize the operation of the extension rod sliding in the through-hole formed in the blow core.

According to an aspect of the present invention devised for such an object, there is provided an extension rod sliding mechanism according to claim 1 including an extension rod that outputs a fluid, which extends an intermediate molding product through blow molding, from a tip part, an extension plate that is joined to the extension rod and that moves in an axial direction of the extension rod, a blow core portion in which a through-hole for guiding the extension rod that moves in the axial direction with a movement of the extension plate is formed, and a guide member that penetrates the extension plate in the axial direction of the extension rod and that guides the extension plate moving in the axial direction of the extension rod.

Herein, the guide member may be a columnar member of which both ends are fixed.

In addition, a first gap determined in advance is formed between the extension rod and the blow core portion in the through-hole, in a portion where the guide member penetrates the extension plate, a second gap determined in advance may is between the guide member and the extension plate, and in a joining portion between the extension rod and the extension plate, a third gap that is a play is formed.

In addition, each of the first gap and the second gap may be smaller than the third gap.

In addition, according to another aspect of the present invention, there is provided an intermediate mold including an extension rod sliding mechanism, in which the extension rod sliding mechanism includes an extension rod that outputs a fluid, which extends an intermediate molding product through blow molding, from a tip part, an extension plate that is joined to the extension rod and that moves in an axial direction of the extension rod, a blow core portion in which a through-hole for guiding the extension rod that moves in the axial direction with a movement of the extension plate is formed, and a guide member that penetrates the extension plate in the axial direction of the extension rod and that guides the extension plate moving in the axial direction of the extension rod.

In addition, according to still another aspect of the present invention, there is provided a mold unit including a stationary side mold, an intermediate mold that includes an extension rod sliding mechanism, and a movable side mold, in which the extension rod sliding mechanism of the intermediate mold includes an extension rod that outputs a fluid, which extends an intermediate molding product through blow molding, from a tip part, an extension plate that is joined to the extension rod and that moves in an axial direction of the extension rod, a blow core portion in which a through-hole for guiding the extension rod that moves in the axial direction with a movement of the extension plate is formed, and a guide member that penetrates the extension plate in the axial direction of the extension rod and that guides the extension plate moving in the axial direction of the extension rod.

According to the present invention, the operation of the extension rod sliding in the through-hole formed in the blow core can be further stabilized.

### BRIEF DESCRIPTION OF THE DRAWINGS

Fig. 1 is a view showing an example of a configuration of a part of a mold unit including an intermediate mold to which an extension rod sliding mechanism according to the present embodiment is applied.
Fig. 2 is a view showing an example of a configuration of a part of the extension rod sliding mechanism.
Figs. 3A to 3C are views showing positions of gaps formed in the extension rod sliding mechanism.

### DETAILED DESCRIPTION OF THE INVENTION

Hereinafter, an embodiment of the present invention will be described in detail with reference to the accompanying drawings.

### <Configuration of Mold Unit>

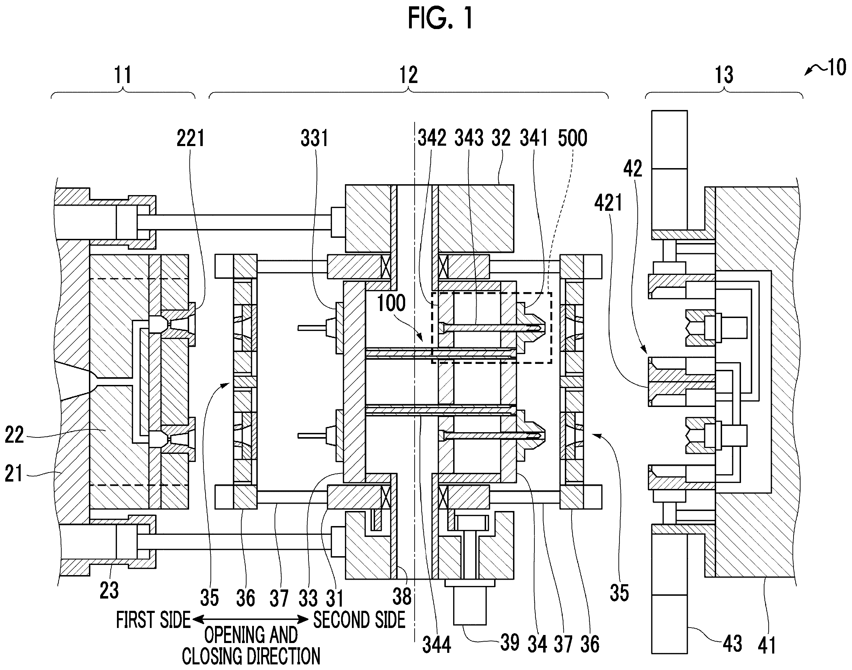

Fig. 1 is a view showing an example of a configuration of a part of a mold unit 10 including an intermediate mold 12 to which an extension rod sliding mechanism 100 according to the present embodiment is applied.

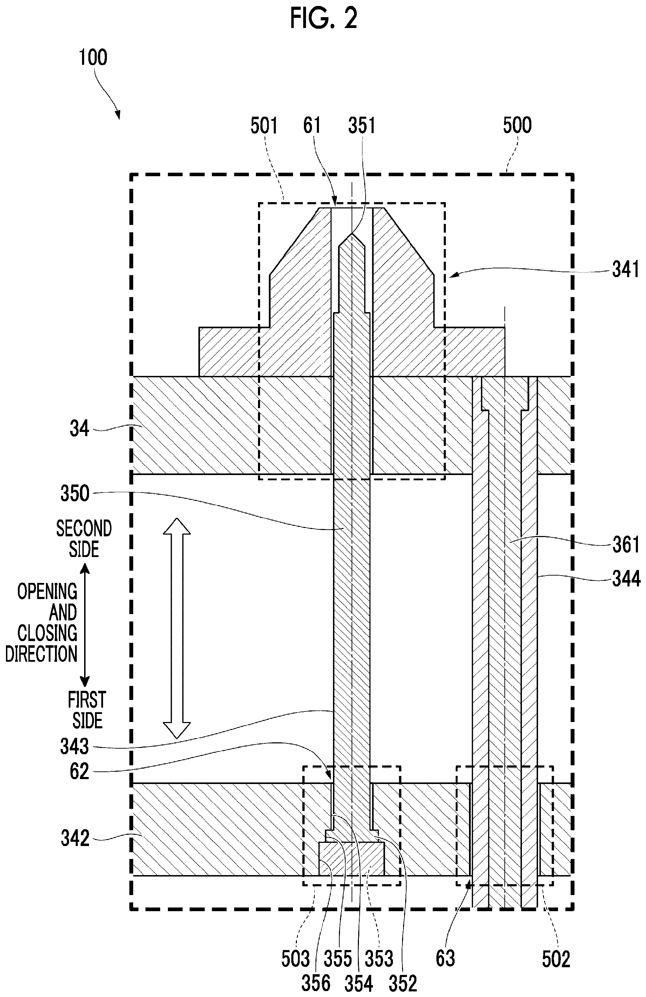

Fig. 2 is a view showing an example of a configuration of a part of the extension rod sliding mechanism 100. Fig. 2 is an enlarged view of a region 500 surrounded by a broken line in Fig. 1 described above.

The mold unit 10 shown in Fig. 1 is a mold unit that configures an injection molding machine which performs injection blow molding. The injection blow molding refers to a molding technique in which injection molding and blow molding are performed in two stages. In the injection blow molding, a preform (not shown), which is an intermediate molding product, is molded through injection molding, and a container or the like, which is a final molding product, is molded by blowing high-pressure air into the preform and expanding the preform through blow molding.

In the present embodiment, in the blow molding of the injection blow molding, as a technique of blowing high-pressure air into the preform, an extension rod 343 to be described later, which can output the high-pressure air, is caused to protrude into the preform. A direction in which the extension rod 343 protrudes into the preform is a direction from the left side of the drawing to the right side of the drawing in Fig. 1, an axial direction of the extension rod 343, and an opening and closing direction of the mold unit. Hereinafter, the direction in which the extension rod 343 protrudes into the preform (a right-left direction in the drawing of Fig. 1) will be called an "axial direction" or an "opening and closing direction". In addition, the left side of the drawing in Fig. 1 is called a "first side in the opening and closing direction", and a right side of the drawing in Fig. 1 is called a "second side in the opening and closing direction".

The mold unit 10 is configured to include a stationary side mold 11, the intermediate mold 12, and a movable side mold 13. The mold unit 10 performs injection molding through mold closing of the intermediate mold 12 and the stationary side mold 11. In addition, the mold unit 10 performs blow molding through mold closing of the intermediate mold 12 and the movable side mold 13.

The stationary side mold 11 configuring the mold unit 10 includes a stationary platen 21, a stationary mold 22, and a drive unit 23. The stationary platen 21 is a metal member that supports the stationary mold 22. The stationary mold 22 is a mold that performs injection molding and includes an injection cavity 221. In the drive unit 23, an injection unit (not shown) that injects a molten resin, which is a material for a preform subjected to injection molding, is installed on the second side of the stationary platen 21, which is a device moving the intermediate mold 12 in the opening and closing direction with respect to the stationary platen 21, in the opening and closing direction.

The intermediate mold 12 configuring the mold unit 10 is a so-called rotating mold disposed between the stationary side mold 11 and the movable side mold 13. The intermediate mold 12 performs mold closing and mold opening at a position facing each of the stationary side mold 11 and the movable side mold 13. The intermediate mold 12 rotates with a direction perpendicular to the opening and closing direction as a rotation axis and includes a rotating frame 31 that rotates on an outer side of a shaft body 38 in a peripheral direction of the shaft body 38 and a support frame 32 that supports the shaft body 38. In addition, the intermediate mold 12 includes an injection core 331 that is a core in injection molding, an injection core frame 33 that supports the injection core 331, a blow core 341 that is a core in blow molding, and a blow core frame 34 that supports the blow core 341.

In addition, the intermediate mold 12 includes an extension plate 342 that moves in the opening and closing direction, the extension rod 343 that moves in the opening and closing direction together with the movement of the extension plate 342, and a guide rod 344 that guides the movement of the extension plate 342. In addition, the intermediate mold 12 includes a gripping mechanism 35 that rotates together with the rotating frame 31, a sliding frame 36, and a guide bar 37. In addition, the intermediate mold 12 includes the shaft body 38 that includes a center axis in a direction perpendicular to the axial direction of the extension rod 343 and a drive unit 39 that rotates the rotating frame 31.

The blow core frame 34 configuring the intermediate mold 12 is a part of a blow core portion and is a metal member that supports the blow core 341 through welding or the like. Inside the blow core frame 34, the extension plate 342, the extension rod 343, and the guide rod 344 are disposed. The blow core frame 34, the blow core 341, the extension plate 342, the extension rod 343, and the guide rod 344 function as elements that configure the extension rod sliding mechanism 100 according to the present embodiment.

The blow core 341 that configures the intermediate mold 12 is a part of the blow core portion, is a mold member that is a core in blow molding, and when the mold unit 10 is closed, comes into close contact with a blow cavity 421 of a movable split mold 42 that is openable and closable in the direction perpendicular to the opening and closing direction of the mold unit 10, forming an injection molding space. In addition, when the mold unit 10 is opened, the blow core 341 is separated from the blow cavity 421 of the movable split mold 42. Fig. 1 shows a state where the mold unit 10 is opened. For this reason, the blow core 341 is separated from the blow cavity 421, and the movable split mold 42 is also opened.

The extension plate 342 configuring the intermediate mold 12 is a metal plate that is installed to be movable in the opening and closing direction (the axial direction of the extension rod 343) inside the blow core frame 34. An end portion 352 of the extension rod 343 on the first side in the opening and closing direction (axial direction) is joined to the extension plate 342. For this reason, when the extension plate 342 moves in the opening and closing direction (axial direction), the extension rod 343 also moves in the opening and closing direction (the axial direction of the extension rod 343) accordingly. Since the end portion 352 of each of a plurality of extension rods 343 is joined to the extension plate 342, the plurality of extension rods 343 can be moved in the opening and closing direction (axial direction) simultaneously by moving the extension plate 342 in the opening and closing direction (the axial direction of the extension rod 343). The extension plate 342 operates by using a drive unit (not shown) configured by a pneumatic cylinder device or the like as a drive source and moves in the opening and closing direction (the axial direction of the extension rod 343).

The extension rod 343 configuring the intermediate mold 12 is a metal member that can output high-pressure air for extending a preform through blow molding from a tip part 351. As shown in Fig. 2, the end portion 352 on an opposite side to the tip part 351 of the extension rod 343 is joined to the extension plate 342. For this reason, when the extension plate 342 moves toward the second side in opening and closing direction (the axial direction of the extension rod 343), the extension rod 343 moves toward the second side in the opening and closing direction (axial direction) accordingly, and the tip part 351 protrudes into the preform. A part of the extension rod 343 on a tip end side (the second side in the opening and closing direction (axial direction)) including the tip part 351 slidably penetrates a through-hole 61 that is formed in the blow core 341 and the blow core frame 34 and that extends in the opening and closing direction (the axial direction of the extension rod 343).

Herein, a technique of joining the extension rod 343 to the extension plate 342 will be described. As shown in Fig. 2, a through-hole 62 formed of a small-diameter portion 354, a medium-diameter portion 355, and a large-diameter portion 356 are formed in the extension plate 342 gradually from the second side toward the first side in the opening and closing direction (the axial direction of the extension rod 343). On the other hand, the diameter of a main body 350 of the extension rod 343 is smaller than the diameter of the small-diameter portion 354. In addition, the end portion 352 of the extension rod 343 has a flange shape. For this reason, the diameter of the flange portion of the end portion 352 is larger than the diameter of the small-diameter portion 354, but is smaller than the diameter of each of the medium-diameter portion 355 and the large-diameter portion 356.

When the extension rod 343 penetrates the through-hole 62 from the first side toward the second side in the opening and closing direction (the axial direction of the extension rod 343), the flange portion of the end portion 352 cannot penetrate the small-diameter portion 354 and remains in the medium-diameter portion 355. In this case, the extension rod 343 is in a free state on the first side in the opening and closing direction (axial direction). Accordingly, a metal block member 353 is buried in a space formed in the large-diameter portion 356. Accordingly, the extension rod 343 is in a state of being fixed in the opening and closing direction (axial direction). In this manner, the extension rod 343 is joined to the extension plate 342.

As shown in Fig. 2, the guide rod 344 configuring the intermediate mold 12 is a columnar metal member of which both ends are fixed in a state of penetrating a through-hole 63 formed in the extension plate 342 in the opening and closing direction (the axial direction of the extension rod 343). Specifically, as shown in Fig. 1, an end portion of the guide rod 344 on the first side in the opening and closing direction (axial direction) is fixed to the injection core frame 33, and an end portion thereof on the second side in the opening and closing direction (axial direction) is fixed to the blow core frame 34. The guide rod 344 functions as a guide member that guides the extension plate 342 moving in the opening and closing direction (the axial direction of the extension rod 343).

A technique of fixing both ends of the guide rod 344 is not particularly limited. The guide rod 344 need only be firmly fixed not to be rattled. Thus, for example, the guide rod 344 may be fixed using a bolt or may be fixed through welding. In the present embodiment, both ends of the guide rod 344 are fixed to the injection core frame 33 and the blow core frame 34 (see Fig. 1) using a bolt 361 penetrating the guide rod 344 in a longitudinal direction (opening and closing direction) (see Fig. 2). Specifically, although not shown, a male screw formed at an end portion of the bolt 361 on the first side in the opening and closing direction and a female screw formed at a surface of the injection core frame 33 on the second side in opening and closing direction are combined with each other, so that an end portion of the guide rod 344 on the first side in the opening and closing direction is fixed to the injection core frame 33.

The gripping mechanism 35 that configures the intermediate mold 12 is a mechanism that grips an outer periphery of a mouth portion of a preform and a final molding product. The sliding frame 36 configuring the intermediate mold 12 is a member that is slidably attached in an axial direction of the guide bar 37 and supports the gripping mechanism 35. When the sliding frame 36 slides on the guide bar 37, the gripping mechanism 35 moves together with the sliding frame 36. The guide bar 37 that configures the intermediate mold 12 is a columnar member of which one end is fixed to the rotating frame 31, and the sliding frame 36 is slidably attached to the other end side. The guide bar 37 guides the sliding of the sliding frame 36.

The shaft body 38 that configures the intermediate mold 12 is a tubular metal member joined to the support frame 32, the injection core frame 33, and the blow core frame 34. The drive unit 39 that configures the intermediate mold 12 is a device that is a drive source for rotating the rotating frame 31 and is configured by, for example, a motor or the like. When the rotating frame 31 rotates, the guide bar 37, the sliding frame 36, and the gripping mechanism 35 rotate together and alternately move to a position where injection molding is performed and a position where blow molding is performed.

The movable side mold 13 that configures the mold unit 10 includes a movable platen 41, a movable split mold 42, and a drive unit 43. The movable platen 41 is a metal member that supports the movable split mold 42. A mold clamping unit (not shown) that performs mold closing and mold opening of the mold unit 10 is installed on the second side in the opening and closing direction with respect to the movable platen 41. The movable split mold 42 is a split mold that is a mold which performs blow molding and includes the blow cavity 421. The drive unit 43 is a device that is a drive source for opening and closing the movable split mold 42 in the opening and closing direction.

The mold unit 10 forms a final molding product such as a container by causing the extension rod 343 to protrude into a preform and blowing high-pressure air to extend the preform as blow molding on the preform which is injection-molded. In this case, when the extension rod 343 protrudes into the preform, the extension rod sliding mechanism 100 described above functions. An air flow path (not shown), an air output hole (not shown), or the like for supplying high-pressure air used in blow molding is formed in the blow core 341, the extension rod 343, or therebetween.

### <Gap Formed in Extension Rod Sliding Mechanism>

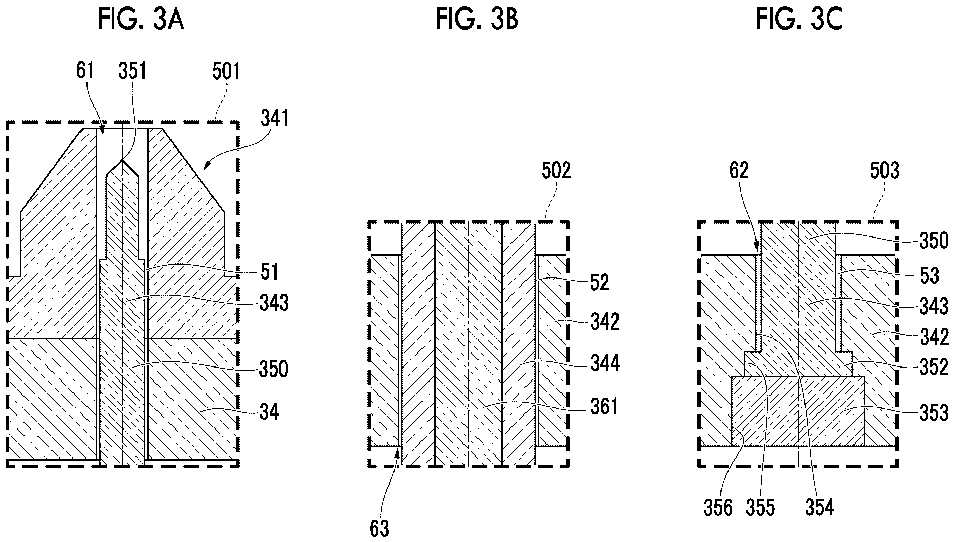

Figs. 3A to 3C are views showing positions of gaps formed in the extension rod sliding mechanism 100. Fig. 3A is an enlarged view of a region 501 surrounded by the broken line in Fig. 2 described above and shows the position of a first gap 51 formed between the extension rod 343, and the blow core 341 and the blow core frame 34. Fig. 3B is an enlarged view of a region 502 surrounded by the broken line in Fig. 2 described above and shows the position of a second gap 52 formed between the guide rod 344 and the extension plate 342. Fig. 3C is an enlarged view of a region 503 surrounded by the broken line in Fig. 2 described above and shows the position of a third gap 53 formed between the extension rod 343 and the extension plate 342.

As shown in Fig. 3A, the first gap 51 is formed between the extension rod 343, and the blow core 341 and the blow core frame 34, and the first gap 51 allows the extension rod 343 to slide in the through-hole 61. A structure that forms the first gap 51 is a structure that is designed so that the size of the first gap 51 falls in a range determined in advance. Specifically, the diameter of the main body 350 of the extension rod 343 is designed to be slightly smaller than the diameter of the through-hole 61.

In addition, as shown in Fig. 3B, the second gap 52 is formed between the guide rod 344 and the extension plate 342, and the second gap 52 allows the extension plate 342 to slide with respect to the guide rod 344. A structure that forms the second gap 52 is a structure that is designed so that the size of the second gap 52 falls in a range determined in advance. Specifically, the diameter of the guide rod 344 is designed to be slightly smaller than the diameter of the through-hole 63 formed in the extension plate 342.

In addition, as shown in Fig. 3C, the third gap 53 is formed between the extension rod 343 and the extension plate 342, and the third gap 53 functions as a play of the extension rod 343 with respect to the extension plate 342. A structure that forms the third gap 53 is a structure that is designed so that the size of the third gap 53 falls in a range determined in advance. Specifically, the diameter of the main body 350 of the extension rod 343 is designed to be slightly smaller than the diameter of the small-diameter portion 354 of the through-hole 62 formed in the extension plate 342.

The extension rod sliding mechanism 100 according to the present embodiment is designed in consideration of a relationship between the structure for forming the first gap 51, the structure for forming the second gap 52, and the structure for forming the third gap 53. Specifically, each of the first gap 51 and the second gap 52 is designed to be smaller than the third gap 53. That is, a difference between the diameter of the main body 350 of the extension rod 343 and the diameter of the through-hole 61 is designed to be smaller than a difference between the diameter of the main body 350 of the extension rod 343 and the diameter of the small-diameter portion 354 of the through-hole 62. That is, the diameter of the through-hole 61 is designed to be smaller than the diameter of the small-diameter portion 354 of the through-hole 62. In addition, a difference between the diameter of the guide rod 344 and the diameter of the through-hole 63 is designed to be smaller than the difference between the diameter of the main body 350 of the extension rod 343 and the diameter of the small-diameter portion 354 of the through-hole 62.

In a configuration where each of the first gap 51 and the second gap 52 is smaller than the third gap 53, a relationship between the structure for forming the first gap 51 and the structure for forming the second gap 52 is a relationship of restricting each other. On the other hand, in the extension rod sliding mechanism 100 according to the present embodiment, since the third gap 53, which is a play, is formed, a restriction on the structure for forming the first gap 51 and a restriction on the structure for forming the second gap 52 are compatible with each other. That is, in the extension rod sliding mechanism 100, the third gap 53 which is a play is formed, and thus, the first gap 51 for stably sliding the extension rod 343 in the opening and closing direction (axial direction) and the second gap 52 for stably moving the extension plate 342 in the opening and closing direction (the axial direction of the extension rod 343) are secured.

In summary, the extension rod sliding mechanism, the intermediate mold, and the mold unit to which the present invention is applied need only adopt the following configuration, and various types of embodiments can be adopted.

That is, the extension rod sliding mechanism 100 according to the present embodiment is an extension rod sliding mechanism including the extension rod 343 that outputs a fluid (for example, high-pressure air) which extends a preform, which is an intermediate molding product, through blow molding, from the tip part 351, the extension plate 342 that is joined to the extension rod 343 and that moves in the axial direction of the extension rod 343, the blow core 341 and the blow core frame 34 in which the through-hole 61 for guiding the extension rod 343 that moves in the axial direction with the movement of the extension plate 342 is formed, and the guide rod 344 that is a guide member which penetrates the extension plate 342 in the axial direction of the extension rod 343 and which guides the extension plate 342 moving in the axial direction of the extension rod 343.

Accordingly, the guide rod 344 that penetrates the extension plate 342 in the axial direction of the extension rod 343 guides the extension plate 342 that moves in the axial direction of the extension rod 343. Therefore, an operation of the extension plate 342 and an operation of the extension rod 343 joined to the extension plate 342 can be stabilized. As a result, "core shift" that causes uneven thickness, gate shift, or the like is suppressed, and generation of abrasion powder caused by the blow core 341, the blow core frame 34, and the extension rod 343 rubbing against each other or occurrence of gnawing of the mold is suppressed.

Herein, the guide rod 344 may be a columnar member of which both ends are fixed.

Accordingly, the guide rod 344, which is a columnar member having both ends fixed, guides the extension plate 342 moving in the axial direction of the extension rod 343. Therefore, the operation of the extension plate 342 can be stabilized. As a result, the operation of the extension rod 343 joined to the extension plate 342 can be stabilized.

In addition, the first gap 51 determined in advance may be formed between the extension rod 343, and the blow core 341 and the blow core frame 34 in the through-hole 61, the second gap 52 determined in advance may be formed between the guide rod 344 and the extension plate 342 in the through-hole 63 which is a portion through which the guide rod 344 penetrates the extension plate 342, and the third gap 53, which is a play, may be formed in a joining portion between the extension rod 343 and the extension plate 342.

Accordingly, it is possible to design in consideration of a relationship between the structure for forming the first gap 51 required for the sliding of the extension rod 343, the structure for forming the second gap 52 required for the sliding of the guide rod 344, and the structure for forming the third gap 53 which is a play. For this reason, for example, even when the structure for forming the first gap 51 and the structure for forming the second gap 52 are in a relationship of restricting each other, the third gap 53, which is a play, is formed. Therefore, a restriction on the structure for forming the first gap 51 and a restriction on the structure for forming the second gap 52 can be made compatible with each other. As a result, the first gap 51 for stably sliding the extension rod 343 and the second gap 52 for stably moving the extension plate 342 in the axial direction (opening and closing direction) of the extension rod 343 can be formed. In addition, since the third gap 53, which is a play, is formed, assembly for joining the extension rod 343 and the extension plate 342 can be simplified.

In addition, each of the first gap 51 and the second gap 52 may be smaller than the third gap 53.

Accordingly, since each of the first gap 51 and the second gap 52 is smaller than the third gap 53, the structure for forming the first gap 51 and the structure for forming the second gap 52 are in a relationship of restricting each other. On the other hand, the third gap 53 can be made large so that a restriction on the structure for forming the first gap 51 and a restriction on the structure for forming the second gap 52 are compatible with each other. As a result, the first gap 51 for stably sliding the extension rod 343 and the second gap 52 for stably moving the extension plate 342 in the axial direction (opening and closing direction) of the extension rod 343 can be formed. Further, since the third gap 53, which is a play, is formed, assembly for joining the extension rod 343 and the extension plate 342 can be simplified.

In addition, the intermediate mold to which the present invention is applied need only adopt the following configuration, and various embodiments can be adopted.

That is, the intermediate mold 12 according to the present embodiment is the intermediate mold 12 including the extension rod sliding mechanism 100. In the intermediate mold, the extension rod sliding mechanism 100 includes the extension rod 343 that outputs a fluid which extends a preform, which is an intermediate molding product, through blow molding from the tip part 351, the extension plate 342 that is joined to the extension rod 343 and that moves in the axial direction of the extension rod 343, the blow core 341 and the blow core frame 34 in which the through-hole 61 for guiding the extension rod 343 that moves in the axial direction with the movement of the extension plate 342 is formed, and the guide rod 344 that is a guide member which penetrates the extension plate 342 in the axial direction of the extension rod 343 and which guides the extension plate 342 moving in the axial direction of the extension rod 343.

Accordingly, the guide rod 344 that penetrates the extension plate 342 in the axial direction of the extension rod 343 guides the extension plate 342 that moves in the axial direction of the extension rod 343. Therefore, an operation of the extension plate 342 and an operation of the extension rod 343 joined to the extension plate 342 can be stabilized. As a result, "core shift" that causes uneven thickness, gate shift, or the like is suppressed, and generation of abrasion powder caused by the blow core 341, the blow core frame 34, and the extension rod 343 rubbing against each other or occurrence of gnawing of the mold is suppressed.

In addition, the mold unit to which the present invention is applied need only adopt the following configuration, and various embodiments can be adopted.

That is, the mold unit 10 according to the present embodiment is a mold unit including the stationary side mold 11, the intermediate mold 12 that includes the extension rod sliding mechanism 100, and the movable side mold 13. In the mold unit, the extension rod sliding mechanism 100 of the intermediate mold 12 includes the extension rod 343 that outputs a fluid which extends a preform, which is an intermediate molding product, through blow molding from the tip part 351, the extension plate 342 that is joined to the extension rod 343 and that moves in the axial direction of the extension rod 343, the blow core 341 and the blow core frame 34 in which the through-hole 61 for guiding the extension rod 343 that moves in the axial direction with the movement of the extension plate 342 is formed, and the guide rod 344 that is a guide member which penetrates the extension plate 342 in the axial direction of the extension rod 343 and which guides the extension plate 342 moving in the axial direction of the extension rod 343.

Accordingly, the guide rod 344 that penetrates the extension plate 342 in the axial direction of the extension rod 343 guides the extension plate 342 that moves in the axial direction of the extension rod 343. Therefore, an operation of the extension plate 342 and an operation of the extension rod 343 joined to the extension plate 342 can be stabilized. As a result, "core shift" that causes uneven thickness, gate shift, or the like is suppressed, and generation of abrasion powder caused by the blow core 341, the blow core frame 34, and the extension rod 343 rubbing against each other or occurrence of gnawing of the mold is suppressed.

### <Others>

Although the embodiment of the present invention has been described hereinbefore, the present invention is not limited to the embodiment described above. In addition, the effects of the present invention are also not limited to those described in the embodiment described above. For example, the configuration of the mold unit 10 shown in Fig. 1, the configuration of the extension rod sliding mechanism 100 shown in Fig. 2, and the positions of the gaps shown in Figs. 3A to 3C are merely examples for achieving the object of the present invention and are not particularly limited.

For example, in the embodiment described above, as shown in Fig. 1, at least two guide rods 344 are provided. However, the number of the guide rods 344 is not limited. The number of the guide rods 344 may be one or may be three or more.

In addition, in the embodiment described above, the shape of the guide rod 344 is a columnar shape, but the shape is not limited thereto, and for example, the shape may be a prismatic shape.

### Brief Description of the Reference Symbols

- 10:: mold unit
- 11:: stationary side mold
- 12:: intermediate mold
- 13:: movable side mold
- 21:: stationary platen
- 22:: stationary mold
- 23:: drive unit
- 31:: rotating frame
- 32:: support frame
- 33:: injection core frame
- 34:: blow core frame
- 35:: gripping mechanism
- 36:: sliding frame
- 37:: guide bar
- 38:: shaft body
- 39:: drive unit
- 41:: movable platen
- 42:: movable split mold
- 43:: drive unit
- 51:: first gap
- 52:: second gap
- 53:: third gap
- 61, 62, 63:: through-hole
- 100:: extension rod sliding mechanism
- 221:: injection cavity
- 341:: blow core
- 342:: extension plate
- 343:: extension rod
- 344:: guide rod
- 421:: blow cavity

## Claims

1. An extension rod sliding mechanism (100) comprising:
an extension rod (343) that outputs a fluid, which extends an intermediate molding product through blow molding, from a tip part (351);
an extension plate (342) that is joined to the extension rod (343) and that moves in an axial direction of the extension rod (343);
a blow core portion (34) in which a through-hole (61) for guiding the extension rod (343) that moves in the axial direction with a movement of the extension plate (342) is formed; and
a guide member (344) that penetrates the extension plate (342) in the axial direction of the extension rod (343) and that guides the extension plate (342) moving in the axial direction of the extension rod (343),
wherein a first gap (51) determined in advance is formed between the extension rod (343) and the blow core portion (34) in the through-hole (61),
in a portion where the guide member (344) penetrates the extension plate (342), a second gap (52) determined in advance is formed between the guide member (344) and the extension plate (342), and
in a joining portion between the extension rod (343) and the extension plate (342), a third gap (53) that is a play is formed.

2. The extension rod sliding mechanism (100) according to claim 1,
wherein the guide member (344) is a columnar member of which both ends are fixed.

3. The extension rod sliding mechanism (100) according to claim 1,
wherein each of the first gap (51) and the second gap (52) is smaller than the third gap (53).

4. An intermediate mold (12) comprising:
the extension rod sliding mechanism (100) according to claim 1.

5. A mold unit comprising:
a stationary side mold (11);
the intermediate mold (12) according to claim 4; and
a movable side mold (13).

## Patentansprüche

1. Verlängerungsstangen-Gleitmechanismus (100), umfassend:
eine Verlängerungsstange (343), die ein Fluid, das ein Zwischenformprodukt durch Blasformen ausdehnt, aus einem Spitzenteil (351) ausgibt;
eine Verlängerungsplatte (342), die mit der Verlängerungsstange (343) verbunden ist und die sich in einer Axialrichtung der Verlängerungsstange (343) bewegt;
einen Blaskernabschnitt (34), in dem ein Durchgangsloch (61) zum Führen der Verlängerungsstange (343), die sich in der Axialrichtung mit einer Bewegung der Verlängerungsplatte (342) bewegt, gebildet ist; und
ein Führungselement (344), das die Verlängerungsplatte (342) in der Axialrichtung der Verlängerungsstange (343) durchdringt und das die Verlängerungsplatte (342), die sich in der Axialrichtung der Verlängerungsstange (343) bewegt, führt,
wobei ein erster Spalt (51), der vorab bestimmt wurde, zwischen der Verlängerungsstange (343) und dem Blaskernabschnitt (34) in dem Durchgangsloch (61) gebildet ist,
in einem Abschnitt, in dem das Führungselement (344) die Verlängerungsplatte (342) durchdringt, ein zweiter Spalt (52), der vorab bestimmt wurde, zwischen dem Führungselement (344) und der Verlängerungsplatte (342) gebildet ist, und
in einem Verbindungsabschnitt zwischen der Verlängerungsstange (343) und der Verlängerungsplatte (342) ein dritter Spalt (53), der ein Spiel ist, gebildet ist.

2. Verlängerungsstangen-Gleitmechanismus (100) nach Anspruch 1,
wobei das Führungselement (344) ein säulenförmiges Element ist, dessen beide Enden befestigt sind.

3. Verlängerungsstangen-Gleitmechanismus (100) nach Anspruch 1,
wobei jeder von dem ersten Spalt (51) und dem zweiten Spalt (52) kleiner ist als der dritte Spalt (53).

4. Zwischenform (12), umfassend:
den Verlängerungsstangen-Gleitmechanismus (100) nach Anspruch 1.

5. Formeinheit, umfassend:
eine stationäre Seite-Form (11);
die Zwischenform (12) nach Anspruch 4; und
eine bewegliche Seite-Form (13).

## Revendications

1. Un mécanisme coulissant de tige d'extension (100) comprenant :
une tige d'extension (343) qui délivre un fluide, qui étend un produit de moulage intermédiaire par moulage par soufflage, depuis une partie de pointe (351);
une plaque d'extension (342) qui est assemblée à la tige d'extension (343) et qui se déplace dans une direction axiale de la tige d'extension (343) ;
une partie de noyau de soufflage (34) dans laquelle est formé un trou traversant (61) destiné à guider la tige d'extension (343) qui se déplace dans la direction axiale avec un déplacement de la plaque d'extension (342) ; et
un élément de guidage (344) qui pénètre dans la plaque d'extension (342) dans la direction axiale de la tige d'extension (343) et qui guide la plaque d'extension (342) qui se déplace dans la direction axiale de la tige d'extension (343),
dans lequel un premier interstice (51) déterminé à l'avance est formé entre la tige d'extension (343) et la partie de noyau de soufflage (34) dans le trou traversant (61),
dans une partie dans laquelle l'élément de guidage (344) pénètre dans la plaque d'extension (342), un deuxième interstice (52) déterminé à l'avance est formé entre l'élément de guidage (344) et la plaque d'extension (342), et
dans une partie de jonction entre la tige d'extension (343) et la plaque d'extension (342), un troisième interstice (53), qui est un jeu, est formé.

2. Un mécanisme coulissant de tige d'extension (100) selon la revendication 1,
dans lequel l'élément de guidage (344) est un élément colonnaire dont les deux extrémités sont fixées.

3. Un mécanisme coulissant de tige d'extension (100) selon la revendication 1,
dans lequel chacun parmi le premier interstice (51) et le deuxième interstice (52) est inférieur au troisième interstice (53).

4. Un moule intermédiaire (12) comprenant :
le mécanisme coulissant de tige d'extension (100) selon la revendication 1.

5. Une unité de moule comprenant :
un moule côté fixe (11) ;
le moule intermédiaire (12) selon la revendication 4 ; et
un moule côté mobile (13).
